# EUROPÄISCHE PATENTSCHRIFT

(11) **EP 2 910 893 B1**
(45) Veröffentlichungstag und Bekanntmachung des Hinweises auf die Patenterteilung: **08.01.2020**
(21) Anmeldenummer: 15000528.8
(22) Anmeldetag: 24.02.2015
(51) Int. Cl.: G01B 11/30, B21B 38/02

(54) **VORRICHTUNG UND VERFAHREN ZUM ERMITTELN VON PLANHEITSABWEICHUNGEN BEIM BEHANDELN EINES BANDFÖRMIGEN GUTS**
DEVICE AND METHOD FOR DETERMINING VARIATIONS IN FLATNESS WHEN HANDLING A MATERIAL IN THE FORM OF A STRIP
DISPOSITIF ET PROCÉDÉ DE DÉTERMINATION D'ÉCARTS DE PLANÉITÉ LORS DU TRAITEMENT D'UN PRODUIT EN FORME DE BANDE

(30) Priorität: 25.02.2014 DE 102014002454
(43) Veröffentlichungstag der Anmeldung: 26.08.2015
(73) Patentinhaber: VDEh-Betriebsforschungsinstitut GmbH, 40237 Düsseldorf (DE)
(72) Erfinder: Krambeer, Hagen, 41363 Jüchen (DE); Brandenburger, Jens, 47839 Krefeld (DE); Müller, Ulrich, Dr., 40789 Monheim (DE); Sonnenschein, Detlef, 40822 Mettmann (DE); Tacke, Andreas, 40235 Düsseldorf (DE)
(74) Vertreter: Tilmann, Max Wilhelm

(56) Entgegenhaltungen:
- EP-A1- 2 517 799
- WO-A1-2012/123809
- DE-A1- 19 932 324
- DE-A1-102012 206 212
- JELALI M ET AL: "EINSATZ MODERNER REGELKONZEPTE ZUR BESSEREN NUTZUNG ANLAGENTECHNISCHER POTENTIALE //USE OF ADVANCED CONTROL CONCEPTS FOR BETTER EXPLOITATION OF PRODUCTION PLANT POTENTIALS", STAHL UND EISEN, VERLAG STAHLEISEN, DUSSELDORF, DE, Bd. 122, Nr. 8, 15. August 2002 (2002-08-15), Seiten 35-39, XP001125528, ISSN: 0340-4803

## Beschreibung

Die Erfindung betrifft ein Verfahren zum Ermitteln von Planheitsabweichungen beim Behandeln eines bandförmigen Guts, insbesondere beim Warmwalzen eines dünnen Metallblechs, beispielsweise eines dünnen Stahlblechs.

Es werden Messrollen beim Kalt- und Warmwalzen von Metallband eingesetzt und sind beispielsweise aus der DE 102 07 501 C1 bekannt. Das Band, beispielsweise Stahlband, wird mit einem gewissen Umschlingungswinkel über eine als Vollrolle ausgestaltete Messrolle geführt. In der Messrolle sind Kraftmessgeber angeordnet, deren Signale ein Messen der Spannungsverteilung über die Bandbreite ermöglichen und dabei Rückschlüsse auf die Planheitsabweichungen zulassen. Bei der Verwendung von bandförmigem Gut, das eine erhöhte Temperatur aufweist, wie beispielsweise beim Warmband, weisen bekannte Messrollen üblicherweise den Nachteil auf, dass sich der Rollenkörper erwärmt und ein Einsatz von als wärmeempfindliche Piezosensoriken ausgestalteten Kraftmessgebern erschwert ist.

EP 1 418 400 A2 offenbart ein Planheits-Messsystem für Metallband, bei dem die Bandplanheit berührungslos gemessen werden kann. Auf der Messoberfläche wird ein Linienmuster erzeugt, das mit einer das Linienmuster auflösenden Kamera erfasst wird. Die von der Kamera erfassten Messdaten können mit einer Referenzmessung verglichen werden, wodurch Rückschlüsse auf die Bandplanheit gezogen werden können. Das Verfahren erfordert die Anordnung eines das Linienmuster erzeugenden Projektors und einer das Linienmuster auflösenden Kamera oberhalb des Bandes. Während die Anordnung unter Laborbedingungen einfach möglich ist, so ist eine Anordnung unter realen Bedingungen in einer Halle, in der das Behandeln eines dünnen bandförmigen Guts erfolgt, meist schwierig. Es sind oft aufwendige Konstruktionen bei der Integration von Messsystemen in Industrieanlagen notwendig, weil das System mindestens zwei Komponenten (Kamera und Projektor) aufweist, deren räumliche Lage jeweils über sechs Parameter festgelegt ist. Der Kalibieraufwand ist erheblich und die Messgenauigkeit kann sich im Laufe der Zeit verschlechtern.

Sowohl der in Stahl und Eisen, Band 122, Nr. 8, Seiten 35 bis 39 veröffentlichte Artikel von Jelali M et al "Einsatz moderner Regelkonzepte zur besseren Nutzung anlagentechnischer Potentiale" und EP 2 517 799 A1 offenbaren, Planheitsabweichungen beim Behandeln eines bandförmigen Guts zu ermitteln, indem eine Aufnahme eines auf das Gut projizierten Lichtmusters aufgenommen und hierüber eine Ermittlung der Planheitsabweichung erfolgt.

EP 2 517 799 A1 offenbart eine Vorrichtung und ein Verfahren zur Online-Messung einer Mikrotopographie, bei der bzw. dem eine Hochgeschwindigkeitskamera mit einem sehr schnellen Laser verwendet wird.

DE 10 2012 206 212 A1 offenbart eine Messung einer Fahrschiene, bei der eine Planheitsmessung in dem Sinne durchgeführt wird, dass die Lage der Fahrschiene in Bezug auf einen Messwertaufnehmer bestimmt wird. Weder wird die Schiene behandelt noch sind die Genauigkeitsanforderungen in einer Behandlungsanlage zum Behandeln eines bandförmigen Guts mit denen bei der Bestimmung der Ermittlung der Lage bzw. der Orientierung der Fahrscheine vergleichbar.

WO 2012/123809 A1 offenbart einen Einsatz einer TOF-Kamera für eine Qualitätsüberwachung in einem Herstellungsverfahren.

Aufgabe der Erfindung ist es daher, ein vereinfachtes Verfahren zu schaffen, mit dem die Planheitsabweichungen beim Behandeln eines bandförmigen Guts auch unter den gegebenen räumlichen Bedingungen ohne großen Aufwand möglich ist, wobei das Verfahren eine Ermittlung von Planheitsabweichungen auch eines eine hohe Temperatur aufweisenden bandförmigen Guts erlaubt.

Die Aufgabe wird mit dem Gegenstand des unabhängigen Patentanspruchs 1 gelöst.

Grundgedanke der Erfindung ist, Planheitsabweichungen des bandförmigen Guts mit einer oder mehreren TOF-Kameras (time of flight camera) zu ermitteln. Das Messprinzip einer TOF-Kamera besteht in der Laufzeitmessung von elektromagnetischen Wellen, beispielsweise Licht, von einem Sender (der Beleuchtungsquelle) zum Messobjekt und vom Messobjekt zu einem PMD-Sensor (photonic mixing device). Eine TOF-Kamera ist regelmäßig aus einem PMD-Sensor, einer Beleuchtungsquelle, einer Optik sowie der Ansteuerungselektronik aufgebaut. Eine solche Kamera wird auch als PMD-Kamera bezeichnet. Die Beleuchtungsquelle kann aus einer (oder mehreren) LEDs, einem (oder mehreren) Lasern oder einer (oder mehreren) ähnlichen Quellen, bevorzugt im nahen Infrarotbereich bestehen. Ein optischer Bandpassfilter vor dem Sensor kann Fremdeinflüsse unterdrücken. Die Auswerteelektronik, die Bestandteil der Bildpunkte des PMD-Sensors ist, kann die Laufzeiten zu den einzelnen Pixeln auswerten. Die Laufzeiten sind direkt proportional zur Distanz und damit kann eine Planheitsabweichung bestimmt werden. Eine TOF-Kamera ermöglicht die Aufnahme einer Matrix mit entsprechend vielen Tiefeninformationen zu einem Zeitpunkt. Es kann die Topographie des betrachteten Bereichs ermittelt werden und aus dieser die Kennwerte für Planheit oder Ebenheit errechnet werden.

Der Begriff TOF-Kamera umfasst erfindungsgemäß einen PMD-Sensor, eine Beleuchtungsquelle bzw. Lichtquelle, eine Optik sowie eine Ansteuerungselektronik. Es kann vorgesehen sein, dass die Beleuchtungsquelle in eine andere Richtung orientiert ist als der PMD-Sensor. PMD-Sensor und Beleuchtungsquelle können in unterschiedlichen Gehäusen oder einem gemeinsamen Gehäuse angeordnet sein. Eine Austrittsöffnung (Austrittspupille) für die Lichtstrahlen der Beleuchtungsquelle und eine Eintrittsöffnung (Eintrittspupille) für die mittels des PMD-Sensors zu erfassenden Lichtstrahlen kann derart vorhanden sein, dass die (Flächen-)Normalen der Eintrittsöffnung und der Austrittsöffnung nicht parallel zueinander verlaufen. Der Winkel zwischen der Normalen der Austrittsöffnung und der Normalen der Eintrittsöffnung kann zwischen 1° bis 90° liegen, vorzugsweise zwischen 5° und 80°, insbesondere bevorzugt zwischen 20° und 60°.

Es wird eine Vorrichtung zum Ermitteln von Planheitsabweichungen beim Behandeln eines bandförmigen Guts beschrieben. Bei dem bandförmigen Gut kann es sich beispielsweise um ein Papier- oder ein Metallband handeln. Das Metall kann Stahl, Alu oder Buntmetall sein. Insbesondere kann die Vorrichtung zum Durchführen des Verfahrens zum Ermitteln von Planheitsabweichungen beim Warmwalzen eines Stahlbandes eingesetzt werden.

Die Vorrichtung weist eine TOF-Kamera auf, die eine Lichtquelle und eine Auswerteeinheit umfasst. Die TOF-Kamera ist derart über dem bandförmigen Gut anordbar, dass eine Aufnahme eines von der Lichtquelle gepulst beleuchteten Bereichs des Guts mittels der TOF-Kamera quer und/oder längs zur Bewegungsrichtung durchgeführt wird. Die Auswerteeinheit ist derart ausgestaltet, dass aus der Aufnahme eine Planheitsabweichung des bandförmigen Guts ermittelbar ist.

In einer bevorzugten Ausführungsform ist die Auswerteeinheit derart ausgestaltet, dass in Abhängigkeit von der Planheitsabweichung ein Signal erzeugbar ist, das über eine Verbindung mit einer Steuereinheit zum Behandeln des Guts eine Einflussnahme auf das Behandeln des bandförmigen Guts ermöglicht. Hierdurch kann eine Automatisierung bei der Behandlung des bandförmigen Guts ermöglicht werden. Die Auswerteeinheit weist dazu bevorzugt einen Knotenpunkt auf, der mit der Steuereinheit zum Behandeln des Guts verbunden werden kann, wobei an dem Knotenpunkt das Signal zur Einflussnahme anliegen kann.

Für eine möglichst "lückenlose" Erfassung des bandförmigen Guts und damit der Planheitsabweichung des bandförmigen Guts kann eine Vorrichtung zur Durchführung des Verfahrenseine Synchronisiervorrichtung aufweisen, die derart ausgestaltet ist, dass die TOF-Kamera unter Berücksichtigung der Bewegungsgeschwindigkeit des bandförmigen Guts Aufnahmen macht, die eine Aneinanderreihung von Bereichen zur Ermittlung von Planheitsabweichungen des Guts ermöglicht.

In einer Ausführungsform kann eine reflektierende Oberfläche vorhanden sein, die insbesondere diffus reflektiert. In Bezug auf das bandförmige Gut und die TOF-Kamera kann die diffus reflektierende Oberfläche derart ausgerichtet sein, dass die Lichtstrahlen von der Beleuchtungsquelle der TOF-Kamera auf ein hoch spiegelndes bandförmiges Gut treffen, von dem bandförmigen Gut reflektiert werden, und auf die diffus reflektierende Oberfläche treffen. Der Teil des von der diffus reflektierenden Oberfläche reflektierten Lichts, der gemäß Reflexionsgesetz über das hoch spiegelnde bandförmige Gut zurück auf den PMD-Sensor der TOF-Kamera trifft, wird bezüglich der Laufzeit ausgewertet. Für eine Vermessung ist die räumliche Orientierung der reflektierenden Oberfläche zu bestimmen, was durch eine zuvor durchgeführte Kalibrierung erfolgen kann.

Das erfindungsgemäße Verfahren kann auch verwendet werden, um eine allgemeine Topographiemessung einer Oberfläche vornehmen zu können. Dazu ist eine TOF-Kamera vorgesehen. Die TOF-Kamera ist derart über der Oberfläche anordbar, dass eine Aufnahme eines von der TOF-Kamera erfassten Bereichs aufnehmbar ist.

Unter dem Begriff "Topografiemessung" sind erfindungsgemäß allgemein Messungen der Oberfläche in Form von Formabweichungen, wie beispielsweise die Planheitsabweichung, umfasst. Die Planheitsabweichungen sind ein Qualitätsmaß, um die Topografie von Metallbändern oder allgemein Flachmaterial zu beschreiben. Andere Parameter sind beispielsweise Quer- oder Längsbögen. Auch kann man beispielsweise Wellenlängen und Amplituden von Rand- oder Mittenwellen bestimmen. Bei der Grobblechherstellung oder allgemein bei der Herstellung von Platten werden Parameter ermittelt, die die Ebenheitsabweichungen beschreiben. Als Messergebnis liegt zunächst die Topografie vor und aus dieser können Formparameter, wie auch die Planheitsabweichungen, ermittelt werden.

Die Erfindung wird im Folgenden anhand eines in der Zeichnung dargestellten Ausführungsbeispiels des näheren erläutert.

In der Zeichnung zeigt die
- Fig. 1: eine schematische Darstellung einer Vorrichtung über einem bandförmigen Gut zum Durchführen des Verfahrens,
- Fig. 2: eine schematische Darstellung eines weiteren Ausführungsbeispiels einer Vorrichtung über einem bandförmigen Gut,
- Fig. 3: eine schematische Darstellung eines weiteren Ausführungsbeispiels und
- Fig. 4: eine schematische Darstellung eines weiteren Ausführungsbeispiels.

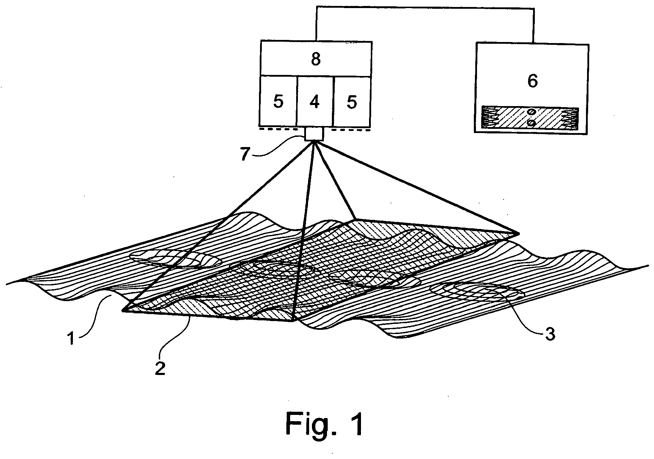

Die Fig. 1 zeigt schematisch ein bandförmiges Gut 1, dessen Planheitsabweichungen ermittelt werden sollen. In dem Ausführungsbeispiel ist eine TOF-Kamera 4 gezeigt, die eine Lichtquelle 5 aufweist. Die TOF-Kamera 4 weist ferner ein Objektiv 7 auf, das einen optischen Bandpassfilter enthalten kann. Eine optional vorgesehene Signalvorverarbeitungseinheit 8 ist in fester relativer Lage zu der TOF-Kamera 4 angeordnet. Die TOF-Kamera 4 weist eine Auswerteeinheit 6 (optional unter Zwischenschaltung der Signalvorverarbeitungseinheit 8) auf, mit der die Topographie, Planheit, Ebenheit, Quer- und Längsbögen des bandförmigen Guts 1 ausgewertet werden können. Mittels der Auswerteeinheit 6 kann die TOF-Kamera 4 zur Geschwindigkeit des bandförmigen Guts 1 synchronisiert werden, so dass die Auslösung der TOF-Kamera 4 an die Geschwindigkeit des bandförmigen Guts 1 mit geringfügigem oder ohne Überlappungsbereich der Aufnahmen angepasst ist. Außerdem können im Sinne einer Regelung Signale zur Steuerung des Prozesses (zum Beispiel Biegen und Schwenken von Walzen eines Walzengerüsts bei der Behandlung eines Walzbands) erzeugt werden.

Die Lichtquelle 5 leuchtet einen Messbereich 2 gepulst aus. Die Laufzeit des Lichtimpulses wird mittels der TOF-Kamera 4 für die Punkte des Messbereichs 2 bestimmt. Die Auflösung des Messbereichs 2 wird durch die Auflösung der TOF-Kamera 4 vorgegeben.

Die Auswerteeinheit 6 verarbeitet die 3D-Daten der TOF-Kamera 4 zu einer Höhenmatrix und weiter beispielsweise zu einer Längungsverteilung (Planheit). Die Topographie des bandförmigen Guts 1 ist zum Beispiel durch Randwellen und Mittelwellen 3 beschreibbar. Innerhalb des betrachteten Messbereichs 2 wird die Topographie vollständig gemessen. Das bandförmige Gut 1 bewegt sich im Messbereich 2 kontinuierlich weiter. Die Messung kann mit hoher Taktrate wiederholt werden, um die Topographie des bandförmigen Guts 1 vollständig erfassen zu können und um Ausreißer eliminieren zu können.

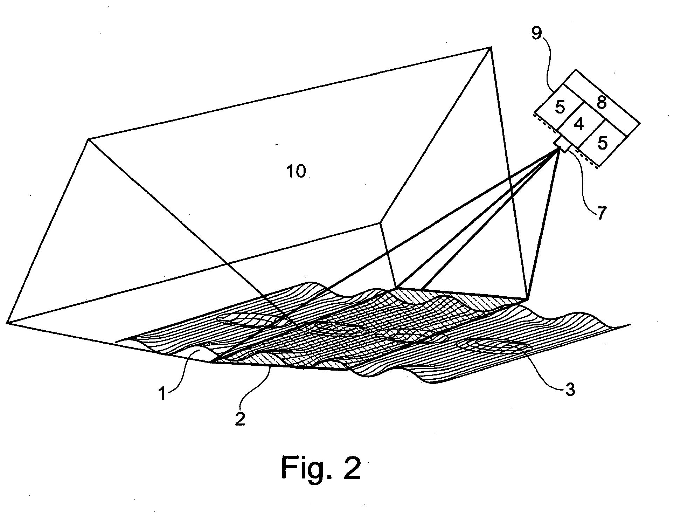

Fig. 2 zeigt eine weitere Ausführungsform einer Vorrichtung, bei der eine reflektierende Oberfläche 10 vorhanden ist. Die reflektierende Oberfläche 10 ist so über dem bandförmigen Gut 1 angeordnet, dass die Oberfläche 10 die auftreffenden, vom bandförmigen Gut 1 kommenden Lichtstrahlen diffus reflektiert. Die in Fig. 2 dargestellte Ausführungsform ist besonders für hoch spiegelndes bandförmiges Gut 1 geeignet. Im Falle hoch spiegelnder Bleche oder Bänder als bandförmiges Gut 1 würden die von der Lichtquelle 5 ausgesendeten Lichtstrahlen gerichtet von der TOF-Kamera 4 wegreflektiert werden und den Sensor nicht erreichen. Die räumliche Orientierung der reflektierenden Oberfläche 10 zum bandförmigen Gut 1 ist bestimmt worden. Hierzu kann insbesondere vor der Messung eine Kalibrierung durchgeführt werden.

Bei den in Fig. 1 und Fig. 2 dargestellten Ausführungsformen sind der PMD-Sensor der TOF-Kamera 4 und die Lichtquelle 5 auf das bandförmige Gut 1 ausgerichtet.

Bei der Ausführungsform gemäß Fig. 2 werden Lichtstrahlen vom bandförmigen Gut 1 zu der reflektierenden Oberfläche 10, die als die diffus reflektierende Oberfläche ausgestaltet ist, reflektiert. Die Entfernung ist nicht überall gleich, daher trifft das Licht nicht überall gleichzeitig auf die reflektierende Oberfläche 10 auf. Die Reflektionskeule eines auf die reflektierende Oberfläche 10 treffenden Lichtstrahls enthält auch genau die Richtung, die in Kombination mit dem bandförmigen Gut 1 den Weg zurück in die TOF-Kamera 4, und somit den PMD-Sensor, weist. Wären die Lichtquelle 5 und der PMD-Sensor in einem Punkt vereint, dann wären Hin- und Rückweg des Lichts exakt gleich. Ist das spiegelnde bandförmige Gut 1 nicht eben, dann führt dies zu lokalen Laufzeitunterschieden, die mittels der TOF-Kamera 4 ermittelt werden und die Planheit des bandförmigen Guts 1 angeben. Die Topografie des bandförmigen Gut 1 kann aus den mittels der TOF-Kamera 4 aufgenommenen Aufnahmen bzw. Bilder berechnet werden. Die von der TOF-Kamera 4 ermittelten Laufzeiten der einzelnen Pixel des PMD-Sensors entsprechen den örtlichen Neigungen der zu vermessenden Oberfläche des bandförmigen Guts 1. An der diffus reflektierenden Oberfläche 10 wird das ausgesendete Licht der Lichtquelle 5 auch in die gleiche Richtung zurückreflektiert und gelangt so wiederum über das bandförmige Gut 1 (Messobjekt) zum PMD-Sensor der TOF-Kamera 4.

Hieraus kann die Planheitsabweichung ermittelt werden. Es kann vorgesehen sein, dass andere Formparameter des bandförmigen Guts über eine Integration der lokalen Neigungen zur Höhenmatrix (Topografie) durchgeführt werden.

In Fig. 2 ist schematisch gezeigt, dass die TOF-Kamera 4 zusammen mit der Signalvorverarbeitungseinheit 8 eine Einheit 9 ausbilden kann. Die Einheit 9 kann auch in der Ausführungsform der Fig. 1 verwendet werden.

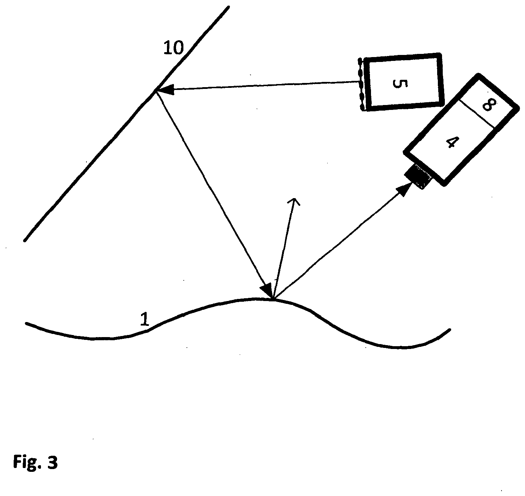

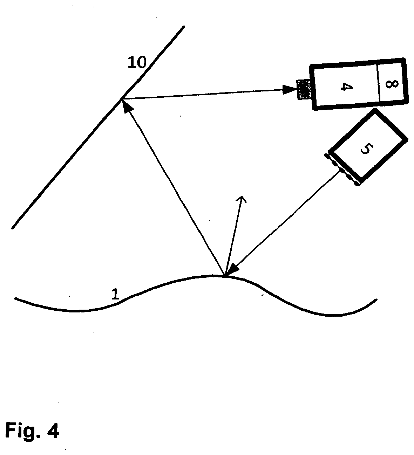

Fig. 3 und 4 zeigen weitere schematische Ausführungsbeispiele, bei denen die Lichtquelle 5 und der PMD-Sensor der TOF-Kamera 4 unterschiedlich ausgerichtet sind.

Bei dem Ausführungsbeispiel der Fig. 3 ist der PMD-Sensor auf das bandförmige Gut 1 ausgerichtet. Die Lichtquelle 5 ist auf die diffus reflektierende Oberfläche 10 ausgerichtet. Das von der Lichtquelle 5 ausgesendete Licht wird über die Oberfläche 10 zum hoch spiegelnden bandförmigen Gut 1 reflektiert und auch in die Richtung zum PMD-Sensor der TOF-Kamera 4 reflektiert.

Bei dem Ausführungsbeispiel der Fig. 4 ist die Lichtquelle 5 auf das bandförmige Gut 1 ausgerichtet. Der PMD-Sensor der TOF-Kamera 4 ist auf die diffus reflektierende Oberfläche 10 ausgerichtet. Das von der Lichtquelle 5 ausgesendete Licht wird über das hoch spiegelnde bandförmige Gut 1 zur diffus reflektierenden Oberfläche 10 reflektiert. Die Lichtstrahlen werden anschließend zum PMD-Sensor der TOF-Kamera 4 empfangen.

## Patentansprüche

1. Verfahren zum Ermitteln von Planheitsabweichungen beim Behandeln eines bandförmigen Guts (1), insbesondere beim Warmwalzen eines Stahlbands, wobei von einem Bereich des Guts mittels einer über dem bandförmigen Gut (1) angeordneten TOF-Kamera (4) quer und/oder längs zur Bewegungsrichtung des Guts eine Aufnahme gemacht wird und aus der Aufnahme eine Höhenmatrix zum Ermitteln von einer Planheitsabweichung ermittelt wird.

2. Verfahren nach Anspruch 1, wobei die Planheitsabweichungen angezeigt und/oder eine Einflussnahme auf das Behandeln des Guts (1) durchgeführt wird.

3. Verfahren nach Anspruch 1 oder 2, wobei ein Auslösen der TOF-Kamera (4) für eine Aufnahme derart synchronisiert wird, dass eine Aneinanderreihung von Bereichen zur Ermittlung von Planheitsabweichungen ermittelt wird.

4. Verfahren nach einem der Ansprüche 1 bis 3, wobei Bereiche mittels der TOF-Kamera (4) aufgenommen werden, die sich zumindest teilweise überlappen.

5. Verfahren nach einem der Ansprüche 1 bis 4, wobei eine Kalibrierung der TOF-Kamera (4) vor einem Anordnen der TOF-Kamera über dem bandförmigen Gut durchgeführt wird.

6. Verfahren nach einem der vorhergehenden Ansprüche, wobei eine reflektierende Oberfläche (10) vorhanden ist, die in Bezug auf das bandförmige Gut (1) und die TOF-Kamera (4) derart ausgerichtet ist, das von der TOF-Kamera (4) ausgesendete, von dem bandförmigen Gut (1) reflektierte Lichtstrahlen, die auf die reflektierende Oberfläche (10) treffen, in Richtung der TOF-Kamera (4) reflektiert werden und die Laufzeit gemessen wird.

## Claims

1. Method for calculating flatness deviations when treating band-shaped material (1), in particular when hot rolling a steel band, wherein an image is recorded of an area of the material transverse to and/or along the direction of movement of the material by means of a TOF camera (4) arranged above the band-shaped material (1).

2. Method according to claim 1, wherein the flatness deviations are displayed and/or influencing the treatment of the material (1) is implemented.

3. Method according to claim 1 or 2, wherein a triggering of the TOF camera (4) for a recording is synchronised in such a way that a stringing together of areas for calculating flatness deviations is calculated.

4. Method according to one of the claims 1 to 3, wherein areas that at least partly overlap are recorded by means of the TOF camera (4).

5. Method according to one of the claims 1 to 4, wherein a calibration of the TOF camera (4) is carried out prior to arranging the TOF camera above the band-shaped material.

6. Method according to one of the preceding claims, wherein a reflective surface (10) exists, which is aligned in relation to the band-shaped material (1) and the TOF camera (4) in such a way that light beams emitted by the TOF camera (4), reflected by the band-shaped material (1), which fall onto the reflective surface (10), are reflected in the direction of the TOF camera (4) and the duration is measured.

## Revendications

1. Procédé de détermination d'écarts de planéité lors du traitement d'un produit en forme de bande (1), notamment lors du laminage à chaud d'une bande en acier, une caméra temps de vol (4) située au-dessus du produit en forme de bande (1) enregistrant une zone du produit transversalement et/ou longitudinalement dans le sens de mouvement du produit, et à partir de l'enregistrement une matrice d'altitude étant évaluée pour déterminer un écart de planéité.

2. Procédé selon la revendication 1, les écarts de planéité étant indiqués et/ou une influence étant exercée sur le traitement du produit (1).

3. Procédé selon la revendication 1 ou 2, un déclenchement de la caméra temps de vol (4) étant synchronisée pour un enregistrement de telle sorte qu'une juxtaposition des zones est déterminée pour évaluer les écarts de planéité.

4. Procédé selon l'une quelconque des revendications 1 à 3, les zones qui se chevauchent au moins partiellement étant enregistrées par la caméra temps de vol (4).

5. Procédé selon l'une quelconque des revendications 1 à 4, un calibrage de la caméra temps de vol (4) étant effectué avant de disposer la caméra temps de vol au-dessus du produit en forme de bande.

6. Procédé selon l'une des revendications précédentes, une surface réfléchissante (10) étant présente et orientée par rapport au produit en forme de bande (1) et à la caméra temps de vol (4) de telle sorte que des rayons lumineux, frappant la surface réfléchissante (10), émis de la caméra temps de vol (4), réfléchis du produit en forme de bande (1), sont réfléchis en direction de la caméra temps de vol (4) et que la durée de fonctionnement est calculée.
